(19) Europäisches Patentamt
European Patent Office
Office européen des brevets

(11) **EP 2 158 455 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **08760756.0**

(22) Anmeldetag: **10.06.2008**

(51) Int Cl.:
*G01F 1/66* (2006.01)    *G01F 15/00* (2006.01)
*G21C 17/032* (2006.01)    *G10K 11/24* (2006.01)

(86) Internationale Anmeldenummer:
**PCT/EP2008/057195**

(87) Internationale Veröffentlichungsnummer:
**WO 2008/152025 (18.12.2008 Gazette 2008/51)**

(54) **VERFAHREN ZUR MESSUNG VON STRÖMUNGSGESCHWINDIGKEIITEN IN FLÜSSIGEN SCHMELZEN**

METHOD FOR MEASURING FLOW RATES IN LIQUID MELTS

PROCÉDÉ DE MESURE DE VITESSES D'ÉCOULEMENT DANS DES MATIÈRES FONDUES LIQUIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.06.2007 DE 102007027392**

(43) Veröffentlichungstag der Anmeldung:
**03.03.2010 Patentblatt 2010/09**

(73) Patentinhaber: **Helmholtz-Zentrum Dresden - Rossendorf e.V.**
**01328 Dresden (DE)**

(72) Erfinder:
• **ECKERT, Sven**
**01259 Dresden (DE)**
• **GERBETH, Gunter**
**01328 Dresden (DE)**
• **GUNDRUM, Thomas**
**01454 Ullersdorf (DE)**

(56) Entgegenhaltungen:
**US-A- 4 287 755        US-A- 5 251 490**
**US-A1- 2005 016 298    US-A1- 2006 079 815**
**US-A1- 2006 260 929    US-B1- 6 343 511**

**Beschreibung**

Die Erfindung betrifft ein Verfahren zur Messung der Strömungsgeschwindigkeit in flüssigen Schmelzen in einem Temperaturbereich oberhalb von 200 °C mit einem Ultraschallgenerator sowie zugehörigem Ultraschall-Wellenleiter nach dem Ultraschall-Doppler-Verfahren.

Gemäß dem Stand der Technik sind keine Verfahren bekannt, mit denen mit einer ausreichenden Genauigkeit lokale Strömungsgeschwindigkeiten in heißen Schmelzen bestimmt werden könnten. Heiße Schmelzen, wie flüssige Metalle oder Halbleiter sind nichttransparent. Aus diesem Grund sind optische Messverfahren ausschließlich auf freie Oberflächen der Schmelzen beschränkt. In der Praxis werden beispielsweise Schwimmkörper auf die freie Oberfläche aufgesetzt und deren Bewegung verfolgt. Es sind invasive Methoden bekannt, bei denen Probekörper in die Schmelze eingetaucht werden und die Kraftwirkung auf diese Körper vermessen oder die Auflösungsrate des Materials bestimmt wird.

Diese Verfahren stellen in der Regel einen signifikanten Eingriff und eine nicht zu vernachlässigende Störung des jeweiligen Prozesses dar und liefern lediglich sehr grobe Messwerte.

Es sind weiterhin Korrelationsmessverfahren bekannt. So können beispielsweise Temperaturschwankungen über eine bestimmte Messstrecke hinweg verfolgt werden. Die Laufzeit der Signale liefert einen Wert für die Geschwindigkeit zwischen zwei Messpunkten. Dieses Ergebnis kann allerdings aufgrund des nötigen Abstandes zwischen den Messpunkten nicht als lokaler Messwert interpretiert werden.

Im Gegensatz zu den in der Strömungsmechanik weit verbreiteten optischen Messverfahren sind die Ultraschallmessverfahren prinzipiell für einen Einsatz in nichttransparenten Fluiden geeignet. Die wesentliche Komponente der Messapparatur ist der Ultraschallwandler in Form eines piezoelektrischen Kristalls (auch piezoelektrischer Wandler genannt), der elektrisch mit einem Frequenzgenerator und einem Auswertegerät verbunden ist. Die Übertragung der Ultraschallwellen in das zu untersuchende Fluid erfolgt vom Ultraschallwandler direkt in das Fluid oder über die Außenwand des das Fluid umschließenden Behälters.

Weit verbreitet sind Ultraschall-Durchflussmessgeräte zur Bestimmung des Durchsatzes strömender Medien in Rohren oder Rinnen. Die Schrift DE 198 12 458 C2 beschreibt einen Sende- und/oder Empfangskopf für einen Ultraschall-Durchflussmesser nach dem Laufzeit-Verfahren, der sich durch die Verwendung eines Ultraschallwellenleiters mit großem Wärmeleitwiderstand auszeichnet. Die Nutzung eines Ultraschallwellenleiters zur Übertragung von Ultraschallsignalen ermöglicht eine räumliche Trennung von heißer Schmelze und piezoelektrischem Wandler. Die Verwendung von Materialien mit einem hohen Wärmeleitwiderstand zur Konstruktion des Ultraschallwellenleiters ist geeignet, die Temperatur am piezoelektrischen Wandler bei praktikabler Länge des Ultraschallwellenleiters zu begrenzen. Darüber hinaus gehende, spezifische Informationen hinsichtlich einer Verwendung des Verfahrens speziell in Schmelzen hoher Temperatur für die Durchführung von Messungen lokaler Geschwindigkeiten in den Schmelzen sind in oben genannter Schrift nicht enthalten. Die Messung lokaler Geschwindigkeiten in den Schmelzen ist mit Hilfe des Laufzeitverfahrens nicht möglich.

Neben den Methoden zur Durchflussmessung mittels Ultraschall wurde auch das Ultraschall-Doppler-Verfahren zur Messung von Geschwindigkeitsprofilen in technischen Strömungen entwickelt (Y. Takeda: Development of an ultrasound velocity profile monitor. Nucl. Eng. Design, Vol. 126, 1991, 277-284). Die Anwendung eines Ultraschallsensors mit integriertem Ultraschallwellenleiter beim Ultraschall-Doppler-Verfahren bedingt eine dispersionsfreie Übertragung der Ultraschallwellen im Ultraschallwellenleiter. Damit ergeben sich an den Aufbau des Ultraschallwellenleiters spezielle Anforderungen. So muss die Materialstärke der die Ultraschallwellen tragenden Struktur quer zur Übertragungsrichtung geringer als die minimale Wellenlänge des zu übertragenden Ultraschallsignals sein. Es sind verschiedene Konzepte zur Konstruktion entsprechender Ultraschallwellenleiter bekannt und werden z.B. in den Schriften WO 96/41157 und DE 20 100 21 187 C1 beschrieben.

Die Schrift DE 100 53 508 A1 beschreibt das stirnseitige Verschließen eines aus einer Folie gewickelten Wellenleiters mittels geeigneter Scheiben, um eine bessere Ankopplung mit hoher Energieübertragung zu erreichen.

Die US 5 251 490 A beschreibt das Messen von in einer Leitung fließenden Fluidströmungen mittel Ultraschalls, wobei die Leitung eine Öffnung aufweist und Ultraschallwellen durch die Öffnung hindurch in die Fluidströmung eingekoppelt und aus derselben ausgekoppelt werden.

Die US 2006/260929 A1 beschreibt einen Ultraschallwandler für Flüssigmetalle mit einem Ultraschalloszillator und einem Schwingungsübertragungsabschnitt, wobei ein zur Kontaktierung mit dem Flüssigmetall vorgesehener Endabschnitt des Schwingungsübertragungsabschnitts aus ferritischem rostfreiem Stahl besteht.

Die US 4 287 755 A1 beschreibt das Untersuchen einer Aluminiumschmelze mittels einer Ultraschallsonde mit einer aluminiumbeschichteten Spitze aus Titan.

Neben der Bereitstellung eines geeignet strukturierten Ultraschallwellenleiters müssen für eine erfolgreiche Realisierung eines Verfahrens zur Bestimmung lokaler Geschwindigkeiten mittels der Ultraschall-Doppler-Methode in Schmelzen bei hohen Temperaturen entsprechende Vorkehrungen für eine verlustarme Ultraschallübertragung getroffen werden. Im hier benannten Anwendungsfall bei hohen Temperaturen treten diesbezügliche Probleme in spezieller Ausprägung auf.

Der Erfindung liegt die Aufgabe zugrunde, ein Verfahren zur Durchführung lokaler Geschwindigkeitsmessungen auf der Basis der Ultraschall-Doppler-Methode in heißen Schmelzen zu entwickeln, bei dem insbesondere eine gute Signalein- und Auskopplung gewährleistet ist.

Die Erfindung betrifft ein Verfahren gemäß Anspruch 1 zur Messung der Strömungsgeschwindigkeit in flüssigen Schmelzen, Ausführungsformen ergeben sich aus den abhängigen Ansprüchen.

Das Verfahren umfasst das Herstellen der Benetzbarkeit der Stirnfläche des Ultraschallwellenleiters vor dem Messvorgang und nachfolgendes direktes Einkoppeln von Ultraschall-Messsignalen in die Schmelze unter einem Winkel verschieden von 90°, indem zumindest die Stirnfläche des Ultraschallwellenleiters in die Schmelze eingetaucht wird, sowie Auskoppeln der in der Schmelze reflektierten Ultraschallsignale über die Stirnfläche des Ultraschallwellenleiters und Weiterleitung derselben an eine Auswerteschaltung.

Es ist von Vorteil, zumindest den Ultraschallwellenleiter während des Messvorganges zu kühlen.

In einer ersten Fortführung der Erfindung wird die der Schmelze zugewandte Stirnfläche des Ultraschallwellenleiters vor dem Eintauchen in die Schmelze mechanisch und/oder chemisch von Schmutz und Oxiden befreit. Das kann einfach mittels organischer Säuren vorgenommen werden.

Nach der Reinigung der Stirnfläche des Ultraschallwellenleiters kann diese mit einer glatten Schutzschicht versehen werden, wobei die glatte Schutzschicht in Form einer Folie oder Deckplatte aufgebracht werden kann.

In einer weiteren Ausgestaltung der Erfindung kann die der Schmelze zugewandte Stirnfläche des Ultraschallwandlers durch das zwischenzeitliche Aufbringen einer Schutzschicht vor erneuter Oxidation geschützt werden.

Gemäß einer weiteren Ausgestaltung der Erfindung ist vorgesehen, dass auf der Stirnfläche des Ultraschallwandlers eine Schutzschicht aus einem Material entsprechend der zu messenden Schmelze aufgebracht wird. Das kann eine metallische Schutzschicht sein.

Um eine optimale Ankopplung der Ultraschallsignale zu erreichen, ist vorgesehen, dass sich die Schutzschicht zu Beginn oder während des Messvorganges in der Schmelze auflöst.

Die Schutzschicht kann einfach mittels Ionenimplantation oder elektrochemischen oder physikalischen Verfahren aufgetragen werden.

Die Erfindung soll nachfolgend an einem Ausführungsbeispiel näher erläutert werden. In den zugehörigen Zeichnungen zeigen

　　　Fig. 1: eine schematische Ansicht des Ultraschallsensors und
　　　Fig. 2: eine spezielle Ausführung eines Ultraschallwellenleiters bestehend aus einer Vielzahl übereinander geschichteter Einzelfolien.

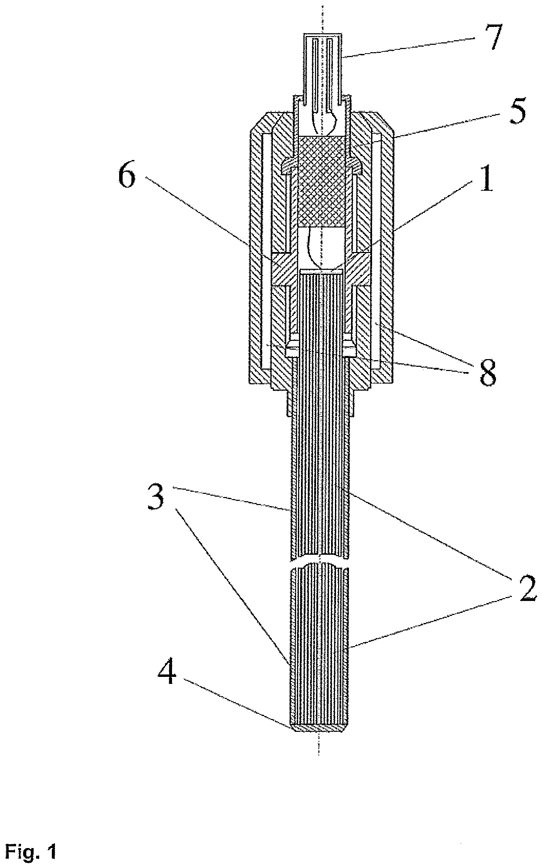

In Fig. 1 ist der prinzipielle Aufbau eines Ultraschallsensors dargestellt, der nach dem Ultraschall-Doppler-Verfahren arbeitet. Damit ist gewährleistet, dass nur ein Sensor für die Bestimmung der Geschwindigkeit der strömenden Schmelze notwendig ist. Das Eintauchen des Sensors in eine Schmelze muss unter einem Winkel erfolgen, der von 90° verschieden ist. Die Benutzung von zwei oder mehreren Ultraschallsensoren ist möglich.

Der Ultraschallsensor besteht aus den Hauptbaugruppen piezoelektrischer Wandler 1 mit zugehörigen elektronischen Komponenten 5 zur Steuerung des Wandlers 1 und zur internen Aufbereitung, Anpassung und Auswertung der Signale und einem Ultraschallwellenleiter 2 in axialer Anordnung. Der piezoelektrische Wandler 1 befindet sich dabei auf der der Strömung abgewandten Seite des Ultraschallwellenleiters **2.** Der Ultraschallwellenleiter 2 ist von einem Schutzmantel 3 umgeben. Das Ausgangssignal liegt an einer Anschlussbuchse 7 an, die sich axial hinter den elektronischen Komponenten 5 befindet und kann somit über ein Kabel an ein außerhalb des Sensors befindliches nicht dargestelltes Auswertegerät übertragen werden.

Der piezoelektrische Wandler 1 und die elektrischen Komponenten 5 für die Signalanpassung 5 sind in einem Schutzgehäuse **6** untergebracht.

Sämtliche Sensorkomponenten innerhalb des Schutzgehäuses 6 müssen dauerhaft auf einem Temperaturniveau kleiner als 100°C gehalten werden. Bei entsprechender thermischer Belastung kann das Schutzgehäuse 6 doppelwandig ausgeführt werden, wobei der Zwischenraum 8 des Schutzgehäuses 6 über entsprechende Anschlüsse mit einem Kühlmittelreservoir verbunden und während der Messung von einem Kühlmittel durchströmt werden kann.

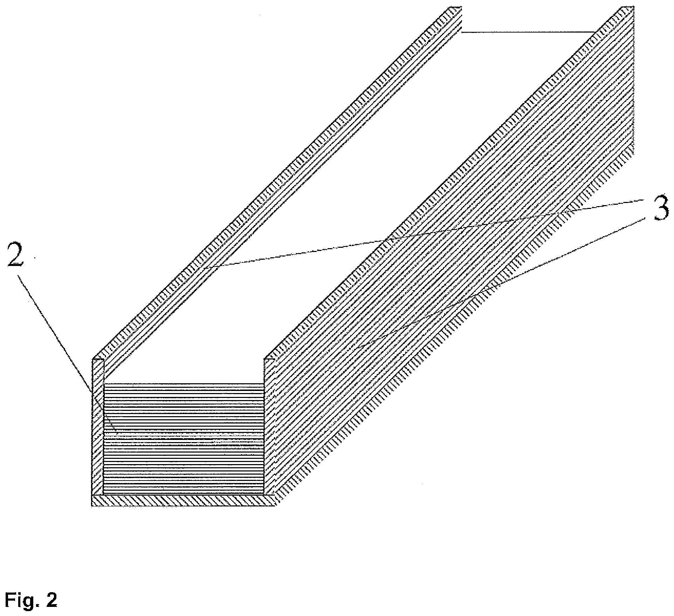

Ein Ultraschallwellenleiter 2, bestehend aus einer Vielzahl flächig übereinander geschichteter Metallfolien, ist in Fig. 2 zu sehen. Die Ausbreitungsrichtung des Ultraschalls verläuft senkrecht zur Flächennormalen der Einzelfolien. Die einzelnen Folienlagen besitzen beispielsweise eine Abmessung von jeweils $5 \times 300$ mm$^2$ bei einer Dicke von jeweils 75 $\mu$m.

Der Ultraschallwellenleiter 2 ist mit einem Schutzmantel 3 versehen, dessen Form dem Querschnitt des Ultraschallwellenleiters 2 angepasst ist. Für die Gewährleistung der Funktion des Ultraschallwellenleiters 2 kann die der Schmelze zugewandte Stirnseite des Schutzmantels 3 des Ultraschallwellenleiters 2 mit einer Deckplatte 4 verschlossen sein (Fig. 1).

Zwischen der Deckplatte 4 und den Folienlagen des Ultraschallwellenleiters 2 besteht eine homogene Materialverbindung. Es ist nicht erforderlich, dass Ultraschallwellenleiter 2, Schutzmantel 3 und Deckplatte 4 aus demselben Material bestehen.

Für einen Einsatz in einer Zinnschmelze bei etwa 1000°C kann der Ultraschallwellenleiter 2 zum Beispiel aus einer Molybdänfolie gefertigt sein, die sich in einem Edelstahlrohr befindet, welches an der vorderen Stirnseite mit einer Edelstahldeckplatte 4 verschlossen ist. Um eine für einen guten akustischen Übergang ausreichende Benetzung zwischen Ultraschallsensor und Zinnschmelze herzustellen, wird die Oberfläche der Edelstahldeckplatte 4 mechanisch poliert und anschließend mit Phosphorsäure behandelt. Auf der gereinigten Oberfläche wird nachfolgend elektrolytisch Zinn abgeschieden.

Der Einsatzbereich eines piezoelektrischen Wandlers wird durch dessen Curie-Temperatur begrenzt. Wird diese Temperaturschwelle überschritten, verliert das Wandlermaterial seine piezoelektrischen Eigenschaften. Die Schmelztemperatur einer Vielzahl kommerziell interessanter Metalle, Halbleiter oder Gläser liegt deutlich oberhalb der Curie-Temperatur gebräuchlicher Piezokeramiken.

Eine Anwendung des Ultraschall-Doppler-Verfahrens in diesen Schmelzen erfordert eine technische Lösung, die einen stabilen, akustischen Kontakt zwischen Ultraschallwandler und Fluid herstellt und gleichzeitig den piezoelektrischen Wandler vor der Einwirkung der zu untersuchenden Schmelze schützt.

Noch stärker als bei den Verfahren der Ultraschall-Durchflussmessung ist beim Ultraschall-Doppler-Verfahren eine möglichst verlustarme Übertragung hochfrequenter Ultraschallsignale erforderlich, um verwertbare Messdaten zu gewinnen. Infolge der hohen Temperaturen der zu untersuchenden Schmelzen ist ein Ultraschallwellenleiter in das Messkonzept integriert. Hiermit sind allerdings nicht zu vermeidende Übertragungsverluste verbunden.

Zusätzliche Verluste ergeben sich bei der Durchschallung von Gefäßwänden, wobei sich insbesondere die Struktur des Wandmaterials von Behältern zur Aufbewahrung heißer Schmelzen oft durch äußerst schlechte Übertragungseigenschaften für den Ultraschall auszeichnet. Daraus ergibt sich die Notwendigkeit einer direkten Ankopplung des Sensors an die zu messende Strömung unmittelbar in der Schmelze. Die hohen Anwendungstemperaturen sowie der direkte Kontakt mit der Schmelze über den Ultraschallwellenleiter stellen besondere Anforderungen an die Ausführung des Sensors, insbesondere des Ultraschallwellenleitermaterials hinsichtlich seiner physikalischen Eigenschaften sowie seiner chemischen Stabilität bzw. Löslichkeit in der Schmelze.

Es ist bekannt, dass jede Schallausbreitung von Verlusten begleitet wird, da sich kontinuierlich ein Teil der mechanischen Energie der fortlaufenden Schallwelle in Wärme umwandelt. Dieser Vorgang wird als Schallabsorption bezeichnet und ist durch den Absorptionskoeffizienten $\alpha$ charakterisiert, welcher eine exponentielle Abnahme des Schalldrucks $p$ einer ebenen, harmonischen Schallwelle entlang einer Strecke $x$ beschreibt (H. Kuttruff: Physik und Technik des Ultraschalls. Hirzel Verlag Stuttgart, 1988, 191 ff.):

$$p(x) = p_0 e^{-\alpha x}$$

Der Absorptionskoeffizient $\alpha$ hängt vom Übertragungsmaterial und der Frequenz der Ultraschallwelle ab und wird durch die Beiträge verschiedener Verlustmechanismen bestimmt, die von der Wechselwirkung der sich ausbreitenden Welle mit der atomaren Struktur des Übertragungsmediums herrühren. Anteile des Absorptionskoeffizienten, die auf Schallabsorption durch Kristallbaufehler, Streuung an thermischen Phononen oder ähnliche Vorgänge zurückzuführen sind, wachsen mit steigender Temperatur an. Ein Anstieg der Temperatur über Werte von beispielsweise 400°C bringt für viele Materialien bereits einen messbaren Anstieg der akustischen Dämpfung mit sich.

Bei Temperaturen oberhalb 700°C ist eine derart drastische Zunahme der Übertragungsverluste zu beobachten, dass eine sinnvolle Nutzung des betreffenden Materials als Ultraschallwellenleiter auszuschließen ist. Für diese speziellen Anwendungen kommen damit nur noch eine geringe Anzahl sorgfältig auszuwählender Ultraschallwellenleitermaterialien in Betracht. Die Tauglichkeit verschiedener Materialien im Hinblick auf ihr akustisches Dämpfungsverhalten bei hohen Temperaturen wurde in umfangreichen Versuchsreihen überprüft.

Es hat sich gezeigt, dass Iridium, Molybdän, Niob, Tantal, Wolfram, Zirkonium, Edelstahl, Titan, Monel oder Legierungen dieser Materialien im Bereich hoher Temperaturen (T > 200°C) entsprechende, für das Ultraschall-Doppler-Verfahren ausreichende Übertragungseigenschaften für den Ultraschall aufweisen.

Eine wesentliche Bedingung besteht in einer ausreichenden Benetzung der Stirnfläche des Ultraschallwellenleiters, um eine gute akustische Ankopplung an die Schmelze sicherzustellen. Versuche haben gezeigt, dass im Falle einer Nichtbenetzung des Ultraschallwellenleiters durch die Schmelze nur ein verschwindend geringer Teil der Ultraschallenergie in das Fluid eingekoppelt werden kann und dadurch kein verwertbares Messsignal entsteht.

Gemäß der Erfindung sind verschiedene mechanische und chemische Bearbeitungsverfahren für die Stirnfläche des Ultraschallwellenleiters vorgesehen, um eine Benetzung zwischen Ultraschallwellenleitermaterial und Schmelze zu erreichen. Die Anzahl und Abfolge der einzelnen Bearbeitungsschritte hängt jeweils von der Art der betrachteten Schmelze, dem Material des Ultraschallwellenleiters und dem Temperaturbereich ab, in dem die Messungen durchgeführt werden sollen.

Eine wesentliche Voraussetzung für eine Benetzung ist die Entfernung von Verschmutzungen, Ablagerungen und Oxidschichten auf der Stirnfläche der Deckplatte 4 des Ultraschallwellenleiters 2. Dies kann mechanisch, z. B. durch Schleifen und Polieren, und/oder chemisch durch eine zeitlich begrenzte Einwirkung geeigneter Chemikalien, z. B. anorganische Säuren oder geeignete Flussmittel, erfolgen.

Im Zeitraum zwischen dieser Präparation und dem Messeinsatz muss die Deckplatte 4 des Ultraschallwellenleiters 2 in geeigneter Weise vor erneuter Oxidation und/oder Verschmutzung geschützt werden. Dies kann durch eine geeignete Schutzschicht, z.B. aus einem Metall realisiert werden, die mechanisch und/oder thermisch auf die Stirnfläche der Deckplatte 4 aufgetragen worden ist. Diese Schutzschicht muss sich während der Messung in der Schmelze innerhalb eines vorgegebenen Zeitraumes auflösen, so dass dann der direkte Kontakt zwischen Schmelze und der präparierten Stirnfläche der Deckplatte 4 erreicht wird.

Bei einigen Materialpaarungen wird das Ultraschallwellenleitermaterial selbst bei ideal gesäuberter Oberfläche grundsätzlich nicht oder nur oberhalb einer bestimmten Temperatur benetzt. Für diese Anwendungsfälle ist es notwendig, dass die Stirnseite der Deckplatte 4 mit einer Schicht eines Materials bedeckt wird, das von der Schmelze in dem für die Messung vorgesehenen Temperaturbereich gut benetzt wird. Zwischen dieser Schicht und dem Ultraschallwellenleiter muss eine homogene Materialverbindung existieren. Die zusätzliche Deckschicht kann durch das Anbringen einer Scheibe oder Folie auf der Deckplatte 4 oder durch elektrochemische Abscheideverfahren realisiert werden.

Eine weitere Möglichkeit besteht in einer Modifikation der oberflächennahen Struktur des Ultraschallwellenleiters durch Ionenimplantation oder ähnliche physikalische Verfahren.

Eine weitere Voraussetzung für die Anwendung eines Sensors mit Ultraschallwellenleiter für das Ultraschall-Doppler-Verfahren ist die dispersionsfreie Übertragung der Ultraschallwelle im Ultraschallwellenleiter. Um dies zu erreichen, wird der Ultraschallwellenleiter aus einer dünnen Struktur aufgebaut. Dies bringt in der Regel eine nur unvollständige Ausfüllung des Querschnitts mit Material mit sich. Sollte bei einem Eintauchen des Ultraschallwellenleiters in die Schmelze dieselbe entlang der Hohlräume in die innere Struktur des Ultraschallwellenleiters vordringen, ist eine störungsfreie, dämpfungsarme Übertragung nicht mehr gewährleistet.

Um dies zu verhindern, ist die der Schmelze zugewandte Stirnfläche des Ultraschallwellenleiters 2 mit der bereits erwähnten Deckplatte 4 verschlossen und kann zusätzlich noch mit einer Deckplatte ausgeführt sein.

Der piezoelektrische Wandler sowie die zum Zweck der Signalanpassung nachgeschalteten elektronischen Bauelemente können in der Regel dauerhaft Temperaturen bis maximal 100°C ausgesetzt werden. In Abhängigkeit von der konkreten Anwendung kann es daher erforderlich werden, diese temperaturempfindlichen Sensorkomponenten zusätzlich zu kühlen. Zu diesem Zweck ist es beispielsweise sinnvoll, die entsprechenden Komponenten in einem Schutzgehäuse 6 mit einem doppelwandigen Schutzmantel 8 unterzubringen, dessen Hohlraum während des Einsatzes von einem Kühlmittel durchströmt wird.

Die Signalqualität bei Geschwindigkeitsmessungen mittels Ultraschall-Doppler-Verfahren kann durch eine geeignete elektrische Anpassung des piezoelektrischen Wandlers an das Auswertegerät deutlich verbessert werden. Diese Anpassung wird in der vorliegenden Erfindung unter Verwendung einer entsprechend dimensionierten Schaltung von Kondensatoren und/oder Spulen realisiert. In der Regel sollte die Impedanz des piezoelektrischen Wandlers 1 unter dem Wellenwiderstand des zum Signaltransport verwendeten Kabels liegen, so dass bei einer Impedanz-Transformation mit Hilfe von Spulen und Kondensatoren Ultraschallfelder mit signifikant höherer Intensität übertragen werden.

Die zu untersuchenden Schmelzen werden oft mit Induktionsheizungen oder elektrischen Heizungen mit Thyristorstellern erwärmt und aufgeschmolzen. Das führt zur Induktion von elektrischen Strömen direkt in der Schmelze oder auch im Ultraschallwellenleiter 2. Der Einsatz von elektromagnetischen Pumpen oder Magnetfeldsystemen zur Strömungsbeeinflussung ist eine weitere Quelle für elektrische Störsignale, die Oberwellen hervorrufen können und damit das Messergebnis beeinträchtigen.

Das erfindungsgemäße Verfahren zeichnet sich aus durch Herstellen der Benetzbarkeit der Stirnfläche 4 des Ultraschallwellenleiters 2 unmittelbar vor dem Messvorgang und nachfolgendes direktes Einkoppeln von Ultraschall-Messsignalen in die Schmelze unter einem Winkel verschieden von 90°, indem zumindest die Stirnfläche 4 des Ultraschallwellenleiters 2 in die Schmelze eingetaucht wird, sowie Auskoppeln der in der Schmelze reflektierten Ultraschallsignale über die Stirnfläche 4 des Ultraschallwellenleiters 2 und Weiterleitung derselben an eine Auswerteschaltung. Bei diesem Vorgang ist es zweckmäßig, zumindest den Ultraschallwellenleiter während des Messvorganges zu kühlen, um einer Verschlechterung des Übertragungsverhaltens entgegen zu wirken.

Die Benetzbarkeit der Stirnfläche 4 des Ultraschallwellenleiters 2 wird dabei dadurch hergestellt, dass diese vor dem Eintauchen in die Schmelze mechanisch und/oder chemisch von Schmutz und Oxiden befreit wird. Das kann einfach mittels organischer Säuren vorgenommen werden.

Im Anschluss an die Reinigung der Stirnfläche 4 des Ultraschallwellenleiters 2 kann diese mit einer glatten Schutzschicht versehen werden, wobei die glatte Schutzschicht in Form einer Folie oder Deckplatte aufgebracht werden kann.

Die der Schmelze zugewandte Stirnfläche 4 kann auch durch das zwischenzeitliche Aufbringen einer Schutzschicht zumindest vorübergehend vor erneuter Oxidation geschützt werden.

Um eine noch bessere Einkopplung der Ultraschallsignale in die Schmelze zu erreichen, kann auf der Stirnfläche des Ultraschallwellenleiters eine Schutzschicht aus einem Material entsprechend der zu messenden Schmelze aufgebracht werden, was auch eine metallische Schutzschicht sein kann.

Um eine optimale Ankopplung der Ultraschallsignale zu erreichen, ist vorgesehen, dass sich die Schutzschicht zu Beginn oder während des Messvorganges in der Schmelze auflöst.

Die Schutzschicht kann einfach mittels Ionenimplantation oder mittels elektrochemischer oder physikalischer Verfahren aufgetragen werden.

**Bezugszeichenliste**

1    Piezoelektrischer Wandler
2    Ultraschallwellenleiter
3    Schutzmantel
4    Deckplatte / Stirnfläche
5    Elektrische Schaltung von Steuer- und ggf. internen Auswerteteil
6    Schutzgehäuse
7    Anschlussbuchse
8    Zwischenraum / hohlwandige Ausführung des Schutzmantels

**Patentansprüche**

1. Verfahren zur Messung der Strömungsgeschwindigkeit in flüssigen Schmelzen in einem Temperaturbereich oberhalb von 200 °C mit einem Ultraschallgenerator sowie zugehörigem Ultraschallwellenleiter nach dem Ultraschall-Doppler-Verfahren, aufweisend folgende Schritte:

   • Herstellen der Benetzbarkeit der Stirnfläche (4) des Ultraschallwellenleiters (2) vor dem Messvorgang,
   • direktes Einkoppeln von Ultraschall-Messsignalen in die Schmelze unter einem Winkel verschieden von 90°, indem zumindest die Stirnfläche (4) des Ultraschallwellenleiters (2) in die Schmelze eingetaucht wird, und
   • Auskoppeln der in der Schmelze reflektierten Ultraschallsignale über die Stirnfläche (4) des Ultraschallwellenleiters (2) und Weiterleitung derselben an eine Auswerteschaltung, wobei der Ultraschallwellenleiter (2) aus einer Vielzahl flächig übereinander geschichteter Einzelfolien besteht, und wobei die Ausbreitungsrichtung des Ultraschalls senkrecht zur Flächennormalen der Einzelfolien verläuft.

2. Verfahren nach Anspruch 1, wobei zumindest der Ultraschallwellenleiter (2) während des Messvorganges gekühlt wird.

3. Verfahren nach Anspruch 1, wobei die der Schmelze zugewandte Stirnfläche (4) des Ultraschallwellenleiters (2) vor dem Eintauchen in die Schmelze mechanisch und/oder chemisch von Schmutz und Oxiden befreit wird.

4. Verfahren nach Anspruch 3, wobei die Reinigung der Stirnfläche (4) des Ultraschallwellenleiters (2) mittels organischer Säuren erfolgt.

5. Verfahren nach einem der Ansprüche 1 bis 4, wobei die Stirnfläche (4) des Ultraschallwellenleiters (2) mit einer glatten Schutzschicht versehen wird.

6. Verfahren nach Anspruch 5, wobei die glatte Schutzschicht in Form einer Folie oder Deckplatte aufgebracht wird.

7. Verfahren nach einem der Ansprüche 1 bis 6, wobei die der Schmelze zugewandte Stirnfläche (4) des Ultraschallwellenleiters (2) durch das zwischenzeitliche Aufbringen einer Schutzschicht vor erneuter Oxidation geschützt wird.

8. Verfahren nach Anspruch 7, wobei auf der Stirnfläche (4) des Ultraschallwellenleiters (2) eine Schutzschicht aus einem Material entsprechend der zu messenden Schmelze aufgebracht wird.

9. Verfahren nach Anspruch 7 oder 8, wobei auf der Stirnfläche (4) des Ultraschallwellenleiters (2) eine metallische Schutzschicht aufgebracht wird.

10. Verfahren nach einem der Ansprüche 5 oder 7 bis 9, wobei die Schutzschicht zu Beginn oder während des Messvorganges in der Schmelze aufgelöst wird.

11. Verfahren nach einem der Ansprüche 5 oder 7 bis 9, wobei die Schutzschicht mittels Ionenimplantation oder elektrochemischen oder physikalischen Verfahren aufgetragen wird.

**Claims**

1. Method for measuring the flow rate in liquid melts in a temperature range above 200°C using an ultrasound generator and an associated ultrasonic waveguide based on the ultrasonic Doppler method, having the following steps:

   - producing the wettability of the end face (4) of the ultrasonic waveguide (1) before the measuring operation,
   - directly injecting ultrasonic measurement signals into the melt at an angle which is different from 90° by immersing at least the end face (4) of the ultrasonic waveguide (1) in the melt, and

- outputting the ultrasonic signals reflected in the melt via the end face (4) of the ultrasonic waveguide (1) and forwarding said signals to an evaluation circuit,

wherein the low-dispersion ultrasonic waveguide (2) consists of a multiplicity of individual films which are layered on top of one another in a two-dimensional manner and wherein the propagation direction of the ultrasound runs perpendicular to the surface normal of the individual films.

2. Method according to Claim 1, wherein least the ultrasonic waveguide (1) is cooled during the measuring operation.

3. Method according to Claim 1, wherein that end face (4) of the ultrasonic waveguide (1) which faces the melt is mechanically and/or chemically freed of dirt and oxides before being immersed in the melt.

4. Method according to Claim 3, wherein the end face (4) of the low-dispersion ultrasonic waveguide (2) is cleaned by means of organic acids.

5. Method according to one of Claims 1 to 4, wherein in that the end face (4) of the ultrasonic waveguide (1) is provided with a smooth protective layer.

6. Method according to Claim 5, wherein in that the smooth protective layer is applied in the form of a film or cover plate.

7. Method according to one of Claims 1 to 6, wherein in that that end face (4) of the ultrasonic waveguide (1) which faces the melt is protected from re-oxidation by applying a protective layer in the meantime.

8. Method according to Claim 7, wherein a protective layer made of a material corresponding to the melt to be measured is applied to the end face (4) of the ultrasonic waveguide (1).

9. Method according to Claim 7 or 8, wherein a metal protective layer is applied to the end face (4) of the low-dispersion ultrasonic waveguide (2).

10. Method according to one of Claims 5 or 7 to 9, wherein the protective layer is dissolved in the melt at the beginning of or during the measuring operation.

11. Method according to one of Claims 5 or 7 to 9, wherein the protective layer is applied by means of ion implantation or electrochemical or physical methods.

**Revendications**

1. Procédé de mesure de la vitesse d'écoulement dans une masse fondue liquide dans une plage de températures supérieure à 200°C, comportant un générateur à ultrasons ainsi que des guides d'ondes à ultrasons associés conformément à un procédé de Doppler à ultrasons, comportant les étapes consistant à :

    - créer une mouillabilité de la face avant (4) du guide d'ondes à ultrasons (2) avant le processus de mesure,
    - injecter directement des signaux de mesure à ultrasons dans la masse fondue sous un angle différent de 90° en plongeant au moins la face avant (4) du guide d'ondes à ultrasons (2) dans la masse fondue, et
    - extraire les signaux à ultrasons réfléchis dans la masse fondue par l'intermédiaire de la face avant (4) du guide d'ondes à ultrasons (2) et les réacheminer vers un circuit d'évaluation,

dans lequel le guide d'ondes à ultrasons (2) est constitué d'une pluralité de films individuels empilés les uns sur les autres de manière plane, et dans lequel la direction de propagation des ultrasons s'étend perpendiculairement aux normales aux surfaces des films individuels.

2. Procédé selon la revendication 1, dans lequel au moins le guide d'ondes à ultrasons (2) est refroidi pendant le processus de mesure.

3. Procédé selon la revendication 1, dans lequel la face avant (4) du guide d'ondes à ultrasons (2) qui est tournée vers la masse fondue est débarrassée mécaniquement et/ou chimiquement de la salissure et d'oxydes avant qu'elle soit plongée dans la masse fondue.

4. Procédé selon la revendication 3, dans lequel le nettoyage de la face avant (4) du guide d'ondes à ultrasons (2) est effectué au moyen d'acides organiques.

5. Procédé selon l'une des revendications 1 à 4, dans lequel la face avant (4) du guide d'ondes à ultrasons (2) est munie d'une couche de protection lisse.

6. Procédé selon la revendication 5, dans lequel la couche de protection lisse est déposée sous la forme d'un film ou d'une plaque de recouvrement.

7. Procédé selon l'une des revendications 1 à 6, dans lequel la face avant (4) tournée vers la masse fondue du guide d'ondes à ultrasons (2) est protégée en déposant à un instant intermédiaire une couche de protection avant de renouveler l'oxydation.

**8.** Procédé selon la revendication 7, dans lequel une couche de protection constituée d'un matériau correspondant à la masse fondue à mesurer est déposée sur la face avant (4) du guide d'ondes à ultrasons (2).

**9.** Procédé selon la revendication 7 ou 8, dans lequel une couche de protection métallique est déposée sur la face avant (4) du guide d'ondes à ultrasons (2).

**10.** Procédé selon l'une des revendications 5 ou 7 à 9, dans lequel la couche de protection est dissoute dans la masse fondue au début du processus de mesure ou pendant celui-ci.

**11.** Procédé selon l'une des revendications 5 ou 7 à 9, dans lequel la couche de protection est déposée par implantation ionique ou par un procédé électrochimique ou physique.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19812458 C2
- WO 9641157 A
- DE 2010021187 C1
- DE 10053508 A1
- US 5251490 A
- US 2006260929 A1
- US 4287755 A1

**In der Beschreibung aufgeführte Nicht-Patentliteratur**

- **Y. TAKEDA.** Development of an ultrasound velocity profile monitor. *Nucl. Eng. Design,* 1991, vol. 126, 277-284
- **H. KUTTRUFF.** Physik und Technik des Ultraschalls. Hirzel Verlag, 1988, 191 ff